# EUROPEAN PATENT APPLICATION

(11) **EP 4 723 328 A1**
(43) Date of publication of application: **08.04.2026**
(21) Application number: 24203857.8
(22) Date of filing: 01.10.2024
(51) Int. Cl.: H01M 50/207, H01M 50/209, H01M 50/289, H01M 50/249, H01M 50/258

(54) **A BATTERY MODULE ASSEMBLY, A BATTERY PACK, AND A VEHICLE**

(71) Applicant: Volvo Truck Corporation, 405 08 Göteborg (SE)
(72) Inventor: Rout, Dhirendra, 422 54 Göteborg (SE); Irannezhad, Mike, 413 30 Göteborg (SE); Jonsson, Kasper, 417 57 Göteborg (SE)
(74) Representative: Kransell & Wennborg KB

(57) **Abstract**

The disclosure relates to a battery module assembly (1) for a battery pack (100), the battery module assembly (1) comprising at least two battery modules (BM1-BM3) arranged on top of each other in the height direction (H) with a first battery module (BM1) adjacently arranged on top of a second battery module (BM2). The disclosure further relates to a battery pack (100) and to a vehicle (200).

## Description

### TECHNICAL FIELD

The disclosure relates generally to energy storage systems. In particular aspects, the disclosure relates to a battery module assembly, a battery pack, and to a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery pack typically comprises a plurality of battery cells, i.e., electrochemical battery cells, which are electrically connected in series and/or in parallel. The battery pack may comprise one or more battery modules, wherein each battery module comprises a stack of battery cells. The battery cells may be prismatic battery cells.

Due to the electrification trend, such as for vehicles, there is an ongoing strive to develop improved technology relating to battery packs and battery modules, such as to provide cost-effective configurations which are reliable, robust and/or space efficient.

### SUMMARY

According to a first aspect of the disclosure, a battery module assembly for a battery pack is provided. The battery module assembly has a longitudinal extension in a longitudinal direction, a width extension in a width direction and a height extension in a height direction. The battery module assembly comprises at least two battery modules arranged on top of each other in the height direction with a first battery module adjacently arranged on top of a second battery module,
wherein
each battery module comprises a plurality of battery cells,
the battery cells of each battery module are stacked together along the longitudinal direction, each battery module comprises at least two crossbeam members extending in the width direction between outer sides of the battery module,
the battery module assembly further comprises a plurality of guide pins,
the plurality of guide pins is arranged to align the first battery module and the second battery module along the height direction. The first aspect of the disclosure may seek to provide a space-efficient, robust and reliable packaging of battery modules which are provided on top of each other. A technical benefit may include that the plurality of guide pins efficiently aligns the two battery modules in the height direction in a robust, reliable, space-efficient and cost-effective manner. For example, by the battery module assembly configuration as disclosed herein, fewer mechanical elements may be required for arranging the battery modules on top of each other. As another example, the battery modules may be mounted closer to each other in the height direction by the herein disclosed configuration, e.g., without any gap therebetween.

Optionally in some examples, including in at least one preferred example, the plurality of battery cells are in the form of prismatic side terminal battery cells. A technical benefit may include that a compact battery module assembly is achieved with high energy density.

Optionally in some examples, including in at least one preferred example, the battery cells of each battery module are stacked together along the longitudinal direction with side terminals thereof facing in a direction along the width direction. A technical benefit may include that a compact battery module assembly is achieved with high energy density.

Optionally in some examples, including in at least one preferred example, the battery module assembly comprises at least one pair of complementary crossbeam members formed by a first complementary crossbeam member of the at least two crossbeam members of the first battery module and by a second complementary crossbeam member of the at least two crossbeam members of the second battery module, wherein the first complementary crossbeam member comprises at least one first hole with an opening facing downwardly in the height direction and the second complementary crossbeam member comprises at least one second hole with an opening facing upwardly in the height direction, wherein the at least one first and second holes are aligned, and wherein a guide pin of the plurality of guide pins is provided in the at least one first and second holes. A technical benefit may include that a robust and reliable connection between the two battery modules is achieved via the crossbeam members.

Optionally in some examples, including in at least one preferred example, the battery module assembly comprises a plurality of pairs of first and second holes arranged one after the other along the width direction of the at least one pair of complementary crossbeam members, wherein a respective guide pin of the plurality of guide pins is provided in each respective pair of first and second holes. A technical benefit may include that a further robust and reliable connection between the two battery modules is achieved.

Optionally in some examples, including in at least one preferred example, the at least one pair of complementary crossbeam members comprises a pair of complementary intermediate crossbeam members with each crossbeam member thereof provided in-between two adjacent battery cells of the respective battery module. A technical benefit may include that a further robust, reliable and space-efficient connection between the two battery modules is achieved.

Optionally in some examples, including in at least one preferred example, the at least one pair of complementary crossbeam members comprises a complementary pair of outer crossbeam members provided at an outer end of the battery module assembly in the longitudinal direction. A technical benefit may include that a further robust, reliable and space-efficient connection between the two battery modules is achieved.

Optionally in some examples, including in at least one preferred example, the second battery module comprises a top cover covering the plurality of battery cells of the second battery module from above in the height direction, wherein at least one guide pin of the plurality of guide pins extends through an opening of the top cover. A technical benefit may include that a protective cover is provided which also allows the at least one guide pin of the plurality of guide pins to be efficiently connected to another battery module, in e.g. a space-efficient manner.

Optionally in some examples, including in at least one preferred example, the at least one guide pin which extends through the opening of the top cover is the guide pin which is provided in the at least one first and second holes. A technical benefit may include that a robust, reliable and space-efficient connection between the two battery modules is achieved via the complimentary crossbeam members, while also ensuring improved protection of the battery cells by the top cover.

Optionally in some examples, including in at least one preferred example, each battery module further comprises at least one longitudinally extending beam member which is provided at a corner of the battery module, as seen in a sectional plane which is perpendicular to the longitudinal direction, wherein the at least one longitudinally extending beam member is attached to the at least two crossbeam members of the battery module. A technical benefit may include that an improved structural rigidity of the battery modules is achieved.

Optionally in some examples, including in at least one preferred example, the at least one longitudinally extending beam member is L-shaped, as seen in a sectional plane which is perpendicular to the longitudinal direction. Preferably, the L-shaped longitudinally extending beam member is provided at the corner such that it partly encloses bottom surfaces and adjacent intermediate side surfaces of the battery cells. A technical benefit may include that a more structurally rigid battery module is achieved, allowing the battery module to be longer in the longitudinal direction without compromising with the structural rigidity.

Optionally in some examples, including in at least one preferred example, the battery module assembly further comprises a side cover covering a side of the battery module assembly which faces away from the battery module assembly in a direction along the width direction, wherein the side cover is attached to the plurality of battery modules via their respective at least two crossbeam members, and/or attached to the plurality of battery modules via the at least one longitudinally extending beam member. A technical benefit may include that an improved protection from the side is achieved, e.g., protecting the herein disclosed side terminals.

Optionally in some examples, including in at least one preferred example, each guide pin of the plurality of guide pins is a pin with a circular cross-section. A technical benefit may include a simplified and space-efficient connection, without e.g. a need of using fasteners such as screws or bolts. In some examples, the pin has as a square-shaped cross-sectional profile, a triangle-shaped profile cross-sectional profile, a pentagon-shaped cross-sectional profile, or any other polygon-shaped cross-sectional profile. A guide pin as disclosed herein preferably means an element which does not have any outer threads for connection. Rather, an outer peripheral contacting surface of the guide pin may be smooth without threads. In some examples, the guide pin is configured to be inserted into a hole without rotating the guide pin about its longitudinal axis.

Optionally in some examples, including in at least one preferred example, each battery module comprises a cooling plate member with a coolant conduit for coolant, wherein the cooling plate member is arranged below the plurality of battery cells of the battery module. A technical benefit may include improved cooling of the battery cells. In some examples, the cooling plate member is provided in an interface between the first and second battery modules which also comprises the herein disclosed guide pins. A technical benefit may include that more space is made available for the cooling plate member.

Optionally in some examples, including in at least one preferred example, the plurality of battery modules comprises an uppermost battery module, wherein the uppermost battery module comprises a top cooling plate member with a coolant conduit for coolant, wherein the top cooling plate member is arranged above the plurality of battery cells of the uppermost battery module. A technical benefit may include improved cooling of the battery cells in the uppermost battery module.

According to a second aspect of the disclosure, a battery pack comprising a battery module assembly according to any one of the examples of the first aspect of the disclosure is provided. The second aspect of the disclosure may seek to provide a space-efficient, robust and reliable packaging of battery modules in a battery pack. Advantages and technical benefits of the second aspect of the disclosure are analogous to the advantages and technical benefits of the first aspect of the disclosure.

Optionally in some examples, including in at least one preferred example, the battery pack comprises a housing, wherein the battery module assembly is provided in an accommodation space of the housing.

Optionally in some examples, including in at least one preferred example, the battery module assembly is attached to the housing by one or more first fasteners which attaches an upper portion of the housing with an uppermost battery module via the at least two crossbeam members of the uppermost battery module. A technical benefit may include a robust and reliable attachment to the housing in a space-efficient manner.

Optionally in some examples, including in at least one preferred example, each one of the one or more first fasteners is inserted into a third hole of a first complementary crossbeam member of the uppermost battery module, wherein the third hole is aligned with the first hole of the first complementary crossbeam member. A technical benefit may include a cost-effective configuration, e.g., fewer drilling operations may be required for making the third and first holes.

Optionally in some examples, including in at least one preferred example, the battery module assembly is attached to the housing by one or more second fasteners which attaches a lower portion of the housing with a lowermost battery module via the at least two crossbeam members of the lowermost battery module. A technical benefit may include a robust and reliable attachment to the housing in a space-efficient manner.

Optionally in some examples, including in at least one preferred example, each one of the one or more second fasteners is inserted into a fourth hole of a second complementary crossbeam member of the lowermost battery module, wherein the fourth hole is aligned with the second hole of the second complementary crossbeam member. A technical benefit may include a cost-effective configuration, e.g., fewer drilling operations may be required for making the fourth and second holes.

According to a third aspect of the disclosure, a vehicle comprising a battery module assembly according to any one of the examples of the first aspect of the disclosure is provided and/or vehicle comprising a battery pack according to any one of the examples of the second aspect of the disclosure is provided.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle according to an example.
**FIG. 2** is an exemplary battery module assembly according to an example.
**FIG. 3a** is an exemplary battery module according to an example.
**FIG. 3b** is the battery module shown in FIG 3a in a more detailed view.
**FIG. 4** is an exemplary battery module assembly according to an example.
**FIGS. 5a****-c** are an exemplary battery pack according to an example.
**FIG. 6** is an exemplary battery pack according to an example.
**FIG. 7** is an exemplary battery cell according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide a battery module assembly with battery modules mounted on top of each other, wherein the battery module assembly is space-efficient, robust and reliable. For example, by the battery module assembly configuration as disclosed herein, fewer mechanical elements may be required for arranging the battery modules on top of each other. As another example, the battery modules may be mounted closer to each other in the height direction by the herein disclosed configuration, e.g., without any gap therebetween. Additionally, an aim of the present disclosure is to provide an improved battery module assembly, battery pack and/or vehicle, which at least partly alleviate one or more drawbacks of the prior art, or which at least are suitable alternatives.

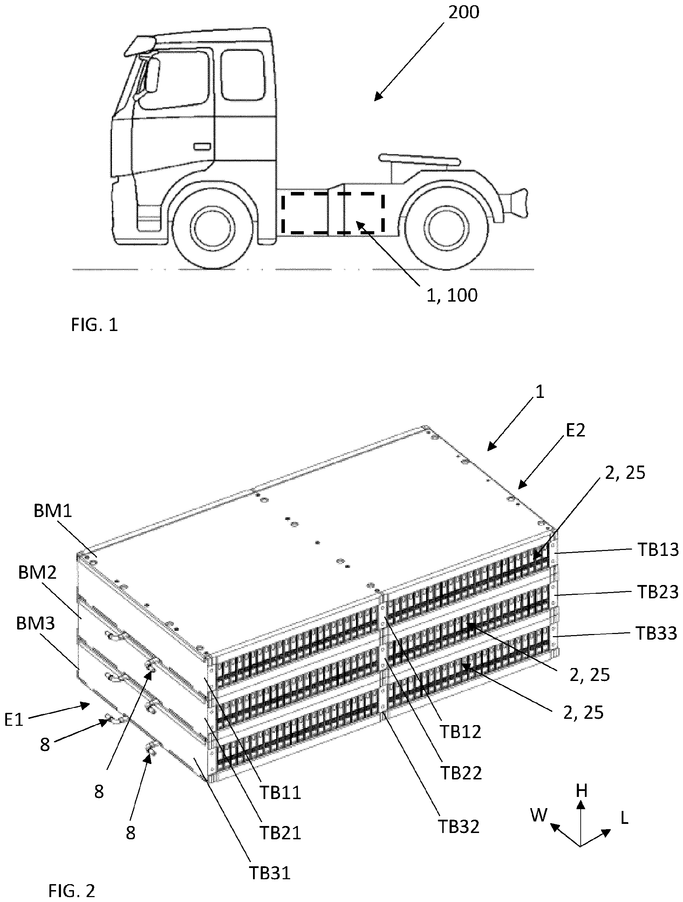

**FIG. 1** is an exemplary vehicle 200 in a side view according to an example. The vehicle 200 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 200 comprises a battery module assembly 1 and/or a battery pack 100 as disclosed herein. The battery pack 1 may at least partly be used for driving one or more electric motors (not shown) of the vehicle 200. The vehicle 200 may accordingly be an electric vehicle or a hybrid vehicle, i.e., a vehicle which at least partly uses electric power for propulsion. The battery module assembly 1 and the battery pack 100 as disclosed herein may also be used in a stationary unit, such as a building and/or any stationary machinery.

**FIG. 2** is an exemplary battery module assembly 1 for a battery pack 100 in a perspective view according to an example. The battery module assembly 1 in FIG. 2 may for example be used in the vehicle 200 shown in FIG. 1.

The battery module assembly 1 has a longitudinal extension in a longitudinal direction L, a width extension in a width direction W and a height extension in a height direction H. The three directions, which also are applicable for the herein disclosed battery pack 100, are perpendicular to each other. The directions L, W, and H may correspond to a Cartesian coordinate system. In some examples, the height direction H may correspond to a height direction of the vehicle 200 when the battery module assembly 1 and/or the battery pack 100 is provided in the vehicle 100. However, it shall be noted that the battery module assembly and/or the battery pack 1 may also be oriented differently in the vehicle 100, or in any other stationary unit.

The battery module assembly 1 comprises at least two battery modules BM1-BM3 arranged on top of each other in the height direction H with a first battery module BM1 adjacently arranged on top of a second battery module BM2. In this example, three battery modules BM1-BM3 are arranged on top of each other.

Each battery module BM1-BM3 comprises a plurality of battery cells 2, and the battery cells 2 of each battery module BM1-BM3 are stacked together along the longitudinal direction L.

Each battery module BM1-BM3 comprises at least two crossbeam members TB11-13, TB21-23, TB31-33 which extends in the width direction W between outer sides of the battery module BM1-BM3. The crossbeam members TB11-13, TB21-23, TB31-33 may be made of any kind of structurally rigid material, such as metal, e.g. aluminum or steel, polymer, e.g. fiber reinforced polymer, or carbon fiber.

The battery module assembly 1 further comprises a plurality of guide pins 3 (not shown in FIG. 2), and the plurality of guide pins 3 is arranged to align the first battery module BM1 and the second battery module BM2 along the height direction H. In this example, the plurality of guide pins 3 is also arranged to align the second battery module BM1 and the third battery module BM3 along the height direction H. By this configuration, the battery modules BM1-BM3 may be mounted closer to each other, e.g., without any gap between each two battery modules BM1-BM3.

The plurality of battery cells 2 are preferably in the form of prismatic side terminal battery cells. Additionally, the battery cells 2 of each battery module BM1-BM3 are preferably stacked together along the longitudinal direction L with side terminals 25 thereof facing in a direction along the width direction W. Side terminals 25 are preferably provided on each lateral outer side of the respective battery module BM1-BM3. A side terminal as disclosed herein means an electrical terminal for electrically connecting the battery cell 2 to an electric circuit.

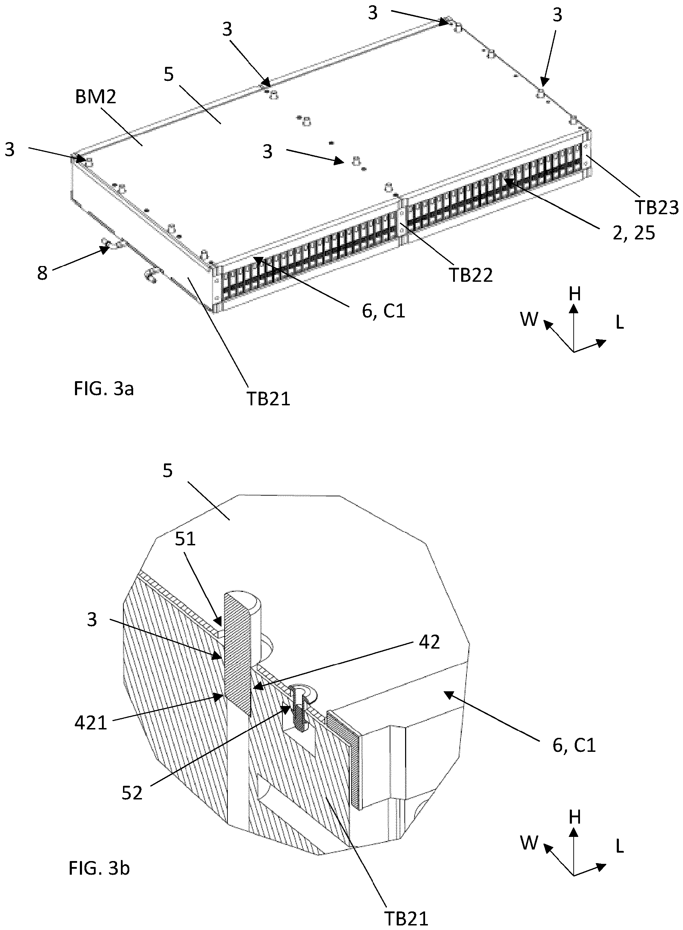

**FIG. 3a** is an exemplary battery module BM2 in a perspective view according to an example. For example, the battery module BM2 in FIG. 3a may be the battery module BM2 as shown in FIG. 2. **FIG. 3b** is a more detailed view of the battery module BM2 shown in FIG. 3a. As shown, the plurality of guide pins 3 is arranged to align the first battery module BM1 (as shown in FIG. 2) and the second battery module BM2 along the height direction H.

As further shown, the second battery module BM2 may comprise a top cover 5 which covers the plurality of battery cells 2 of the second battery module BM2 from above in the height direction H, wherein at least one guide pin 3 of the plurality of guide pins 3 extends through an opening 51 of the top cover 5. This may allow the battery cells 2 to be well protected and also to mount the battery module BM2 close to the battery module BM1, e.g., without any gap therebetween.

In the shown example, the crossbeam member TB21 comprises a hole 42, herein denoted a second hole, for the guide pin 3. The guide pin 3 is provided in the second hole 42. The second hole 42 may as shown comprise a bottom support surface 421 for the guide pin 3. Any hole as disclosed herein for a guide pin 3 may comprise a bottom support surface as shown in FIG. 3b. The second hole 42, and also any other hole for a guide pin 3 as disclosed herein, may have a circular profile, as seen in a sectional plane which is perpendicular to the height direction H. Other profile shapes are also conceivable, depending on the shape of the guide pin. Preferably, the guide pin 3 is provided in a pre-made hole, such as a pre-machined hole or pre-drilled hole, with a diameter which corresponds to a diameter of the guide pin 3, or with a diameter which is slightly larger than the diameter of the guide pin 3, e.g., a diameter which is 0.1 to 5 % larger than the diameter of the guide pin 3.

FIG. 3a and FIG. 3b further depicts that each battery module, here exemplified by the second battery module BM2, may further comprise at least one longitudinally extending beam member 6 which is provided at a corner C1 of the battery module BM2, as seen in a sectional plane which is perpendicular to the longitudinal direction L. The at least one longitudinally extending beam member 6 is attached to the at least two crossbeam members TB21-23 of the battery module BM2. The attachment may be provided by welds, and/or by fasteners, such as screws, bolts etc. (not shown). Preferably, a longitudinally extending beam member 6 is provided at each corner of the battery module BM2, as seen in a sectional plane which is perpendicular to the longitudinal direction L.

The at least one longitudinally extending beam member 6 may as shown in e.g. FIG. 3b be L-shaped, as seen in a sectional plane which is perpendicular to the longitudinal direction L. Hence, the L-shaped beam member 6 may extend over each side of the corner C1. For example, the L-shaped longitudinally extending beam member 6 may as shown be provided at the corner C1 such that it partly encloses bottom surfaces 23 and adjacent intermediate side surfaces 24 of the battery cells 2.

The longitudinally extending beam member 6 for each battery module may also be used as a support surface for an adjacent battery module.

As shown in e.g. FIG. 3a and FIG. 3b, each guide pin 3 of the plurality of guide pins 3 may have a circular cross-section and/or may be formed as a cylinder. The guide pin 3 does preferably not have any threads, but is rather configured to be inserted into a hole 42 by pushing or pressing the guide pin 3 into the hole 42 without rotating the guide pin 3.

With reference to e.g. FIG. 3a, it is further shown that each battery module BM1-BM3 may comprise a cooling plate member 8 with a coolant conduit for coolant, wherein the cooling plate member 8 is arranged below the plurality of battery cells 2 of the battery module BM1-BM3. By being below means in this context that the cooling plate member 8 is arranged below the plurality of battery cells 2, as seen in the height direction H.

With reference to FIG. 3b, it is further shown that the top cover 5 may be attached to any one of the crossbeam members TB21 of the battery module BM2 by a fastener 52, such as shown by a clip.

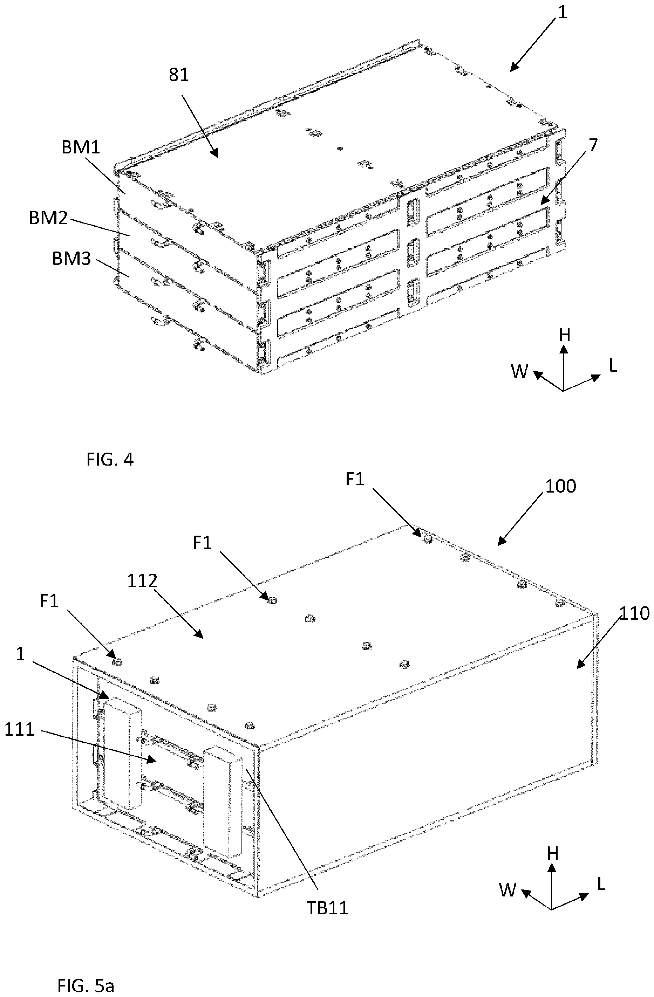

**FIG. 4** is an exemplary battery module assembly 1 in a perspective view according to an example. The battery module assembly 1 in FIG. 4 may for example comprise the three battery modules BM1-BM3 as shown in FIG. 2.

In FIG 4 it is shown that the battery module assembly 1 may further comprise a side cover 7 covering a side of the battery module assembly 1 which faces away from the battery module assembly 1 in a direction along the width direction W. The side cover 7 is attached to the plurality of battery modules BM1-BM3 via their respective at least two crossbeam members TB11-13, TB21-23, TB31-33, and/or attached to the plurality of battery modules BM1-BM3 via the at least one longitudinally extending beam member 6. The attachment may for example be accomplished by fasteners, such as screws, rivets or bolts.

FIG. 4 further depicts that an uppermost battery module BM1 of the plurality of battery modules BM1-BM3 may comprises a top cooling plate member 81 with a coolant conduit for coolant, wherein the top cooling plate member 81 is arranged above the plurality of battery cells 2 of the uppermost battery module BM1.

**FIGS. 5a****-c** is a battery pack 100 in perspective views according to an example. The battery pack 100 may for example comprise a battery module assembly 1 as e.g. shown in FIG. 2. Accordingly, FIGS. 5a-c also shows an example of a battery module 1. The directions of the battery pack 100, i.e., L, W and H, correspond to the directions of the battery module 1.

The battery module assembly 1 in FIGS. 5a-c is provided in an accommodation space 111 of the housing 110.

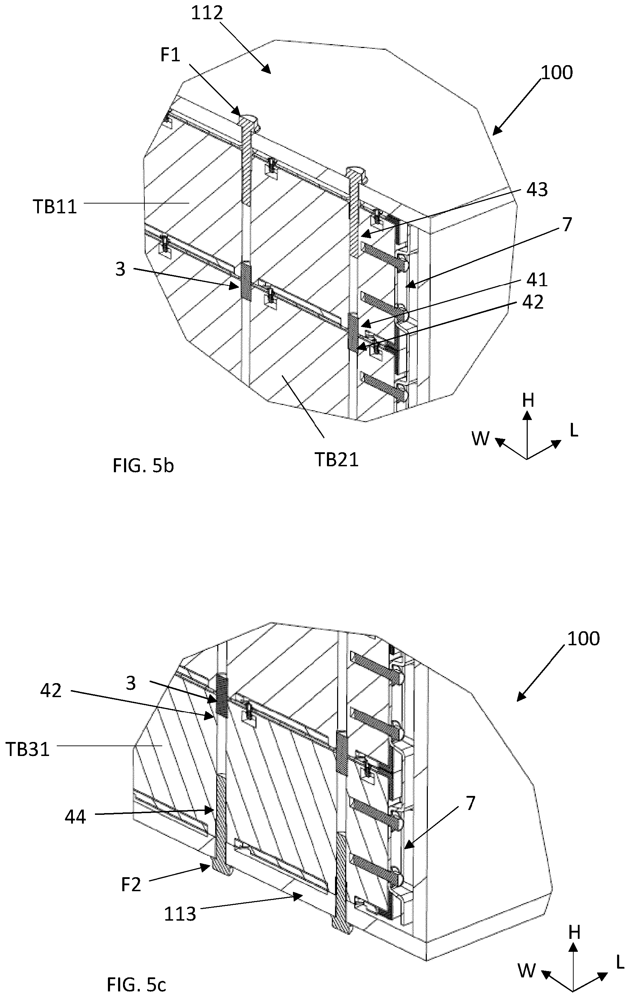

With reference to e.g. FIGS. 5b-c, showing cross-sectional views, and also FIG. 2, it is depicted that the battery module assembly 1 may comprise at least one pair of complementary crossbeam members TB11, TB21; TB12, TB22; TB13, TB23 formed by a first complementary crossbeam member TB11; TB12; TB13 of the at least two crossbeam members of the first battery module BM1 and by a second complementary crossbeam member TB21; TB22; TB23 of the at least two crossbeam members of the second battery module BM2. The first complementary crossbeam member TB11; TB12; TB13 comprises at least one first hole 41 (see FIG. 5b) with an opening facing downwardly in the height direction H and the second complementary crossbeam member TB21; TB22; TB23 comprises at least one second hole 42 with an opening facing upwardly in the height direction H. The at least one first and second holes 41, 42 are aligned, and a guide pin 3 of the plurality of guide pins is provided in the at least one first and second holes 41, 42.

The battery module assembly 1 may comprise a plurality of pairs of first and second holes 41, 42 arranged one after the other along the width direction W of the at least one pair of complementary crossbeam members TB11, TB21; TB12, TB22; TB13, TB23, wherein a respective guide pin 3 of the plurality of guide pins 3 is provided in each respective pair of first and second holes 41, 42.

The at least one pair of complementary crossbeam members TB11, TB21; TB12, TB22; TB13, TB23 may comprise a pair of complementary intermediate crossbeam members TB12, TB22 with each crossbeam member thereof provided in-between two adjacent battery cells 2 of the respective battery module BM1, BM2.

Additionally, or alternatively, the at least one pair of complementary crossbeam members TB11, TB21; TB12, TB22; TB13, TB23 may comprise a complementary pair of outer crossbeam members TB11, TB21; TB13, TB23 provided at an outer end E1, E2 of the battery module assembly 1 in the longitudinal direction L.

With reference to e.g. FIGS. 5a-b, it is shown that the battery module assembly 1 may be attached to the housing 110 by one or more first fasteners F1 which attaches an upper portion 112 of the housing 110 with an uppermost battery module BM1 via the at least two crossbeam members TB11-TB13 of the uppermost battery module BM1.

By way of example, each one of the one or more first fasteners F1 may be inserted into a third hole 43 of a first complementary crossbeam member TB11 of the uppermost battery module BM1, wherein the third hole 43 is aligned with the first hole 41 of the first complementary crossbeam member TB11.

With reference to FIG 5c, it is shown that the battery module assembly 1 may be attached to the housing 110 by one or more second fasteners F2 which attaches a lower portion 113 of the housing 110 with a lowermost battery module BM3 via the at least two crossbeam members TB31, TB32, TB33 of the lowermost battery module BM3.

By way of example, each one of the one or more second fasteners F2 may be inserted into a fourth hole 44 of a second complementary crossbeam member TB31 of the lowermost battery module BM3, wherein the fourth hole 44 is aligned with the second hole 42 of the second complementary crossbeam member TB31.

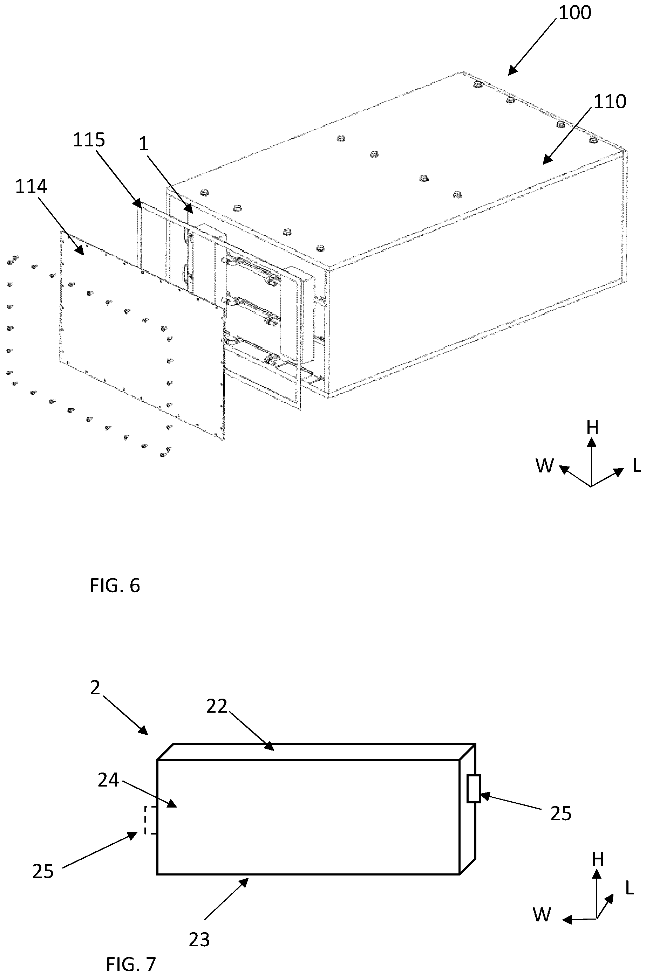

**FIG. 6** is an exemplary battery pack 100 in a perspective view according to an example. For example, the battery pack 100 may be the battery pack 100 shown in FIGS. 5a-c. The battery pack 100 may as shown in FIG. 7 comprise an end cover 114 for closing the accommodation space 111. A sealing gasket 115 may be provided in an interface between the end cover 114 and the housing 110. The end cover 114 may be attached by one or more fasteners to the housing 100, e.g., such that the end cover 114 is removably attached to the housing 110, thereby allowing servicing/repair of the battery module assembly 1.

**FIG. 7** is an exemplary battery cell 2 in a perspective view according to an example. The battery cell 2 is a prismatic side terminal battery cell, and comprises a top surface 22, a bottom surface 23 and four intermediate side surfaces 24. In some examples, the battery cell 2 may be referred to as a box-shaped battery cell. As further shown, the prismatic battery cell 2 comprises an electric terminal 25 which is provided on an intermediate side surface which faces away from the battery cell 2 in a direction along the width direction W. For example, there may be at least one electrical terminal 25 on each side which faces away from the battery cell 2 in a direction along the width direction W, i.e., on two opposite sides of the battery cell 2.

In the following, possible features and feature combinations of the present disclosure are presented as a list of Examples.

Example 1: A battery module assembly (1) for a battery pack (100), the battery module assembly (1) having a longitudinal extension in a longitudinal direction (L), a width extension in a width direction (W) and a height extension in a height direction (H), the battery module assembly (1) comprising at least two battery modules (BM1-BM3) arranged on top of each other in the height direction (H) with a first battery module (BM1) adjacently arranged on top of a second battery module (BM2),
wherein
each battery module (BM1-BM3) comprises a plurality of battery cells (2),
the battery cells (2) of each battery module (BM1-BM3) are stacked together along the longitudinal direction (L),
each battery module (BM1-BM3) comprises at least two crossbeam members (TB11-13, TB21-23, TB31-33) extending in the width direction (W) between outer sides of the battery module (BM1-BM3),
the battery module assembly (1) further comprises a plurality of guide pins (3),
the plurality of guide pins (3) is arranged to align the first battery module (BM1) and the second battery module (BM2) along the height direction (H).

Example 2: The battery module assembly (1) according to Example 1, wherein the plurality of battery cells (2) are in the form of prismatic side terminal battery cells.

Example 3: The battery module assembly (1) according to Example 2, wherein the battery cells (2) of each battery module (BM1-BM3) are stacked together along the longitudinal direction (L) with side terminals (25) thereof facing in a direction along the width direction (W).

Example 4: The battery module assembly (1) according to any one of the preceding Examples, comprising at least one pair of complementary crossbeam members (TB11, TB21; TB12, TB22; TB13, TB23) formed by a first complementary crossbeam member (TB11; TB12; TB13) of the at least two crossbeam members of the first battery module (BM1) and by a second complementary crossbeam member (TB21; TB22; TB23) of the at least two crossbeam members of the second battery module (BM2), wherein the first complementary crossbeam member (TB 11; TB12; TB13) comprises at least one first hole (41) with an opening facing downwardly in the height direction (H) and the second complementary crossbeam member (TB21; TB22; TB23) comprises at least one second hole (42) with an opening facing upwardly in the height direction (H), wherein the at least one first and second holes (41, 42) are aligned, and wherein a guide pin (3) of the plurality of guide pins is provided in the at least one first and second holes (41, 42).

Example 5: The battery module assembly (1) according to Example 4, comprising a plurality of pairs of first and second holes (41, 42) arranged one after the other along the width direction (W) of the at least one pair of complementary crossbeam members (TB 11, TB21; TB12, TB22; TB13, TB23), wherein a respective guide pin (3) of the plurality of guide pins (3) is provided in each respective pair of first and second holes (41, 42).

Example 6: The battery module assembly (1) according to any one of Examples 4 or 5, wherein the at least one pair of complementary crossbeam members (TB11, TB21; TB12, TB22; TB13, TB23) comprises a pair of complementary intermediate crossbeam members (TB12, TB22) with each crossbeam member thereof provided in-between two adjacent battery cells (2) of the respective battery module (BM1, BM2).

Example 7: The battery module assembly (1) according to any one of Examples 4-6, wherein the at least one pair of complementary crossbeam members (TB11, TB21; TB12, TB22; TB13, TB23) comprises a complementary pair of outer crossbeam members (TB 11, TB21; TB13, TB23) provided at an outer end (E1, E2) of the battery module assembly (1) in the longitudinal direction (L).

Example 8: The battery module assembly (1) according to any one of the preceding Examples, wherein the second battery module (BM2) comprises a top cover (5) covering the plurality of battery cells (2) of the second battery module (BM2) from above in the height direction (H), wherein at least one guide pin of the plurality of guide pins (3) extends through an opening (51) of the top cover (5).

Example 9: The battery module assembly (1) according to Example 8, wherein the at least one guide pin which extends through the opening (51) of the top cover (5) is the guide pin which is provided in the at least one first and second holes (41, 42) according to any one of Examples 4-7.

Example 10: The battery module assembly (1) according to any one of the preceding Examples, wherein each battery module (BM1-BM3) further comprises at least one longitudinally extending beam member (6) which is provided at a corner (C1) of the battery module (BM1-BM3), as seen in a sectional plane which is perpendicular to the longitudinal direction (L), wherein the at least one longitudinally extending beam member (6) is attached to the at least two crossbeam members (TB11-13, TB21-23, TB31-33) of the battery module (BM1-BM3).

Example 11: The battery module assembly (1) according to Example 10, wherein the at least one longitudinally extending beam member (6) is L-shaped, as seen in a sectional plane which is perpendicular to the longitudinal direction (L).

Example 12: The battery module assembly (1) according to any one of the preceding Examples, further comprising a side cover (7) covering a side of the battery module assembly (1) which faces away from the battery module assembly (1) in a direction along the width direction (W), wherein the side cover (7) is attached to the plurality of battery modules (BM1-BM3) via their respective at least two crossbeam members (TB11-13, TB21-23, TB31-33), and/or attached to the plurality of battery modules (BM1-BM3) via the at least one longitudinally extending beam member (6) according to any one of Examples 10-11.

Example 13: The battery module assembly (1) according to any one of the preceding Examples, wherein each guide pin of the plurality of guide pins (3) is a pin with a circular cross-section.

Example 14: The battery module assembly (1) according to any one of the preceding Examples, wherein each battery module (BM1-BM3) comprises a cooling plate member (8) with a coolant conduit for coolant, wherein the cooling plate member (8) is arranged below the plurality of battery cells (2) of the battery module (BM1-BM3).

Example 15: The battery module assembly (1) according to any one of the preceding Examples, wherein the plurality of battery modules (BM1-BM3) comprises an uppermost battery module (BM1), wherein the uppermost battery module (BM1) comprises a top cooling plate member (81) with a coolant conduit for coolant, wherein the top cooling plate member (81) is arranged above the plurality of battery cells (2) of the uppermost battery module (BM1).

Example 16: A battery pack (100) comprising a battery module assembly (1) according to any one of the preceding Examples.

Example 17: The battery pack (100) according to Example 16, comprising a housing (110), wherein the battery module assembly (1) is provided in an accommodation space (111) of the housing (110).

Example 18: The battery pack (100) according to Example 17, wherein the battery module assembly (1) is attached to the housing (110) by one or more first fasteners (F1) which attaches an upper portion (112) of the housing (110) with an uppermost battery module (BM1) via the at least two crossbeam members of the uppermost battery module (BM1).

Example 19: The battery pack (100) according to Example 18, wherein each one of the one or more first fasteners (F1) is inserted into a third hole (43) of a first complementary crossbeam member (TB 11) according to Example 4 of the uppermost battery module (BM1), wherein the third hole (43) is aligned with the first hole (41) of the first complementary crossbeam member (TB 11).

Example 20: The battery pack (100) according to any one of Examples 17-19, wherein the battery module assembly (1) is attached to the housing (110) by one or more second fasteners (F2) which attaches a lower portion (113) of the housing (110) with a lowermost battery module (BM3) via the at least two crossbeam members of the lowermost battery module (BM3).

Example 21: The battery pack (100) according to Example 20, wherein each one of the one or more second fasteners (F2) is inserted into a fourth hole (44) of a second complementary crossbeam member (TB31) according to Example 4 of the lowermost battery module (BM3), wherein the fourth hole (44) is aligned with the second hole (42) of the second complementary crossbeam member (TB31).

Example 22: A vehicle (200) comprising a battery module assembly (1) according to any one of Examples 1-15 and/or a battery pack (100) according to any one of Examples 16-21.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery module assembly (1) for a battery pack (100), the battery module assembly (1) having a longitudinal extension in a longitudinal direction (L), a width extension in a width direction (W) and a height extension in a height direction (H), the battery module assembly (1) comprising at least two battery modules (BM1-BM3) arranged on top of each other in the height direction (H) with a first battery module (BM1) adjacently arranged on top of a second battery module (BM2),
wherein
each battery module (BM1-BM3) comprises a plurality of battery cells (2),
the battery cells (2) of each battery module (BM1-BM3) are stacked together along the longitudinal direction (L),
each battery module (BM1-BM3) comprises at least two crossbeam members (TB11-13, TB21-23, TB31-33) extending in the width direction (W) between outer sides of the battery module (BM1-BM3),
the battery module assembly (1) further comprises a plurality of guide pins (3),
the plurality of guide pins (3) is arranged to align the first battery module (BM1) and the second battery module (BM2) along the height direction (H).

2. The battery module assembly (1) according to claim 1, wherein the plurality of battery cells (2) are in the form of prismatic side terminal battery cells.

3. The battery module assembly (1) according to claim 2, wherein the battery cells (2) of each battery module (BM1-BM3) are stacked together along the longitudinal direction (L) with side terminals (25) thereof facing in a direction along the width direction (W).

4. The battery module assembly (1) according to any one of the preceding claims, comprising at least one pair of complementary crossbeam members (TB1 1, TB21; TB12, TB22; TB13, TB23) formed by a first complementary crossbeam member (TB 11; TB12; TB13) of the at least two crossbeam members of the first battery module (BM1) and by a second complementary crossbeam member (TB21; TB22; TB23) of the at least two crossbeam members of the second battery module (BM2), wherein the first complementary crossbeam member (TB 11; TB12; TB13) comprises at least one first hole (41) with an opening facing downwardly in the height direction (H) and the second complementary crossbeam member (TB21; TB22; TB23) comprises at least one second hole (42) with an opening facing upwardly in the height direction (H), wherein the at least one first and second holes (41, 42) are aligned, and wherein a guide pin (3) of the plurality of guide pins is provided in the at least one first and second holes (41, 42).

5. The battery module assembly (1) according to claim 4, comprising a plurality of pairs of first and second holes (41, 42) arranged one after the other along the width direction (W) of the at least one pair of complementary crossbeam members (TB11, TB21; TB12, TB22; TB13, TB23), wherein a respective guide pin (3) of the plurality of guide pins (3) is provided in each respective pair of first and second holes (41, 42).

6. The battery module assembly (1) according to any one of the preceding claims, wherein the second battery module (BM2) comprises a top cover (5) covering the plurality of battery cells (2) of the second battery module (BM2) from above in the height direction (H), wherein at least one guide pin of the plurality of guide pins (3) extends through an opening (51) of the top cover (5).

7. The battery module assembly (1) according to any one of the preceding claims, wherein each battery module (BM1-BM3) further comprises at least one longitudinally extending beam member (6) which is provided at a corner (C1) of the battery module (BM1-BM3), as seen in a sectional plane which is perpendicular to the longitudinal direction (L), wherein the at least one longitudinally extending beam member (6) is attached to the at least two crossbeam members (TB 11-13, TB21-23, TB31-33) of the battery module (BM1-BM3).

8. The battery module assembly (1) according to claim 7, wherein the at least one longitudinally extending beam member (6) is L-shaped, as seen in a sectional plane which is perpendicular to the longitudinal direction (L).

9. The battery module assembly (1) according to any one of the preceding claims, wherein each guide pin of the plurality of guide pins (3) is a pin with a circular cross-section.

10. The battery module assembly (1) according to any one of the preceding claims, wherein each battery module (BM1-BM3) comprises a cooling plate member (8) with a coolant conduit for coolant, wherein the cooling plate member (8) is arranged below the plurality of battery cells (2) of the battery module (BM1-BM3).

11. A battery pack (100) comprising a battery module assembly (1) according to any one of the preceding claims, and further comprising a housing (110), wherein the battery module assembly (1) is provided in an accommodation space (111) of the housing (110).

12. The battery pack (100) according to claim 11, wherein the battery module assembly (1) is attached to the housing (110) by one or more first fasteners (F1) which attaches an upper portion (112) of the housing (110) with an uppermost battery module (BM1) via the at least two crossbeam members of the uppermost battery module (BM1).

13. The battery pack (100) according to claim 12, wherein each one of the one or more first fasteners (F1) is inserted into a third hole (43) of a first complementary crossbeam member (TB11) according to claim 4 of the uppermost battery module (BM1), wherein the third hole (43) is aligned with the first hole (41) of the first complementary crossbeam member (TB 11).

14. The battery pack (100) according to any one of claims 11-13, wherein the battery module assembly (1) is attached to the housing (110) by one or more second fasteners (F2) which attaches a lower portion (113) of the housing (110) with a lowermost battery module (BM3) via the at least two crossbeam members of the lowermost battery module (BM3).

15. A vehicle (200) comprising a battery module assembly (1) according to any one of claims 1-10 and/or a battery pack (100) according to any one of claims 11-14.
